(19) Europäisches Patentamt
European Patent Office
Office européen des brevets

(11) **EP 3 104 328 A1**

(12) **EUROPEAN PATENT APPLICATION**

(43) Date of publication:
**14.12.2016 Bulletin 2016/50**

(51) Int Cl.:
***G06T 7/00*** *(2006.01)*

(21) Application number: **15305893.8**

(22) Date of filing: **11.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Gandolph, Dirk**
**30952 Ronnenberg (DE)**
• **Ostermann, Ralf**
**30657 Hannover (DE)**
• **Sorgi, Lorenzo**
**30655 Hannover (DE)**

(74) Representative: **Huchet, Anne et al**
**TECHNICOLOR**
**1-5, rue Jeanne d'Arc**
**92130 Issy-les-Moulineaux (FR)**

(54) **METHOD AND APPARATUS FOR CAMERA CALIBRATION**

(57) A method and an apparatus (20) provide for camera calibration. A focus evaluation unit (22) determines (10) a current focus set for a camera to be calibrated. A calibration unit (23) then adapts (11) calibration of the camera based on the current focus by adapting an intrinsic matrix of a pinhole camera mapping function, e.g. by determining an adaptation term for the intrinsic matrix of the pinhole camera mapping function based on a focus stroke resulting from the current focus. For example, the adaptation term is a correction matrix that is added to the intrinsic matrix.

```
┌─────────────────────────┐
│  Determine current focus │ ⟿ 10
│    set for the camera    │
└─────────────────────────┘
             │
             ▼
┌─────────────────────────┐
│ Adapt camera calibration by │ ⟿ 11
│  adapting intrinsic matrix  │
└─────────────────────────┘
```

**Fig. 1**

EP 3 104 328 A1

**Description**

**FIELD**

The present principles relate to a method and an apparatus for camera calibration. More specifically, a solution for camera calibration that can cope with a change of the camera focus is presented.

**BACKGROUND**

The continuous increase of processing power and a rapid progress in video capture techniques leverage novel applications in Computer Vision, which now is becoming part of the consumer sector. Mobile phone built-in video cameras can already be used to scan the environment and to generate a 3D model of the environment. The calculations for 3D modelling require the mapping of the 3D coordinates into the 2D image plane, and vice versa. The 3D-2D relation is described with a pinhole camera model and must be defined by means of calibrating the camera. Unfortunately, the camera calibration has to be executed under the restriction that the focus of the camera optics is constant. The requirement for a fixed focus is based on its direct impact on the pinhole camera model. Images taken with a focus different from that used for the camera calibration cannot be processed correctly, as the underlying pinhole camera model is violated. Therefore, a focus deviating from the focus of the camera calibration will introduce distortions in the matrix operations required in Computer Vision calculations.

Modern cameras permanently adjust their focus, as auto-focusing ensures sharp pictures even when the conditions given by camera motion or moving objects in the scenes are changing. This, however, causes the violation of the underlying fixed focus pinhole camera model and introduces distortions, inevitably reducing the quality of Computer Vision calculations, e.g. for a 3D model generation.

Known solutions often do not react on focus changes and simply ignore the occurring errors. Other, quite sophisticated camera calibration systems, use complex parameterized solutions. They measure the camera calibration for many distinct focus settings and try to approximate the conditions by interpolating in between. The latter leads to a disproportional burden and thus is not appropriate for the consumer market.

SUMMARY

The present principles relate to a solution for camera calibration, which is capable of coping with focus changes.

According to one aspect of the present principles, a method for camera calibration comprises:

- determining a current focus set for the camera; and
- adapting calibration of the camera based on the current focus by adapting an intrinsic matrix of a pinhole camera mapping function.

Accordingly, a computer readable storage medium has stored therein instructions enabling camera calibration, which, when executed by a computer, cause the computer to:

- determine a current focus set for a camera to be calibrated; and
- adapt calibration of the camera based on the current focus by adapting an intrinsic matrix of a pinhole camera mapping function.

The computer readable storage medium is a non-transitory volatile or non-volatile storage medium, such as, for example, but not limited to, a hard disk, an optical or magnetic disk or tape, a solid state memory device, etc. The storage medium thus tangibly embodies a program of instructions executable by a computer or a processing device to perform program steps as described herein.

Also, in one embodiment, an apparatus for camera calibration comprises:

- a focus evaluation unit configured to determine a current focus set for a camera to be calibrated; and
- a calibration unit configured to adapt calibration of the camera based on the current focus by adapting an intrinsic matrix of a pinhole camera mapping function.

In another embodiment, an apparatus for camera calibration comprises a processing device and a memory device having stored therein instructions, which, when executed by the processing device, cause the apparatus to:

- determine a current focus set for a camera to be calibrated; and

- adapt calibration of the camera based on the current focus by adapting an intrinsic matrix of a pinhole camera mapping function.

The described solution enables correcting the camera calibration in dependency of the focus that has been set for the camera optics. The corrected calibration greatly improves the confidence and reliability of subsequent image analysis processes, e.g. computer vision processes. The correction calculation is based on general physical optic parameters, which can be easily provided by every lens system. It is appropriate for the consumer market, as no complex calculations are required.

In one embodiment, in order to adapt the intrinsic matrix of a pinhole camera mapping function, an adaptation term for the intrinsic matrix of the pinhole camera mapping function is determined based on a focus stroke resulting from the current focus.

In one embodiment, the adaptation term is a correction matrix that is added to the intrinsic matrix. For example, the correction matrix is a $3\times3$ matrix whose matrix elements are zero except for the first two matrix elements on the main diagonal. These first two matrix elements on the main diagonal are determined by a difference between a current effective image sensor distance and an effective image sensor distance set for calibration.

## BRIEF DESCRIPTION OF THE DRAWINGS

Fig. 1     schematically illustrates an embodiment of a method for camera calibration;

Fig. 2     schematically depicts one embodiment of an apparatus for camera calibration according to the present principles;

Fig. 3     schematically illustrates another embodiment of an apparatus for camera calibration according to the present principles;

Fig. 4     explains the relation between the sensor size, the viewing angle, and the focal length;

Fig. 5     shows a long-focus lens;

Fig. 6     shows a design equivalent to Fig. 5, which uses a front positive lens and a rear negative lens in a telephoto combination;

Fig. 7     schematically illustrates a focus manipulation;

Fig. 8     depicts a perspective projection of a 3D world point into a 2D image plane point;

Fig. 9     shows a physical image sensor adaptation for the pinhole camera model via a normalized image plane;

Fig. 10     illustrates the influence of the skew angle of the camera sensor on the intrinsic matrix; and

Fig. 11     depicts the focus stroke in dependence on the focus.

## DETAILED DESCRIPTION OF PREFERED EMBODIMENTS

For a better understanding the principles of some embodiments shall now be explained in more detail in the following description with reference to the figures. It is understood that the described solution is not limited to these exemplary embodiments and that specified features can also expediently be combined and/or modified without departing from the scope of the present principles as defined in the appended claims.

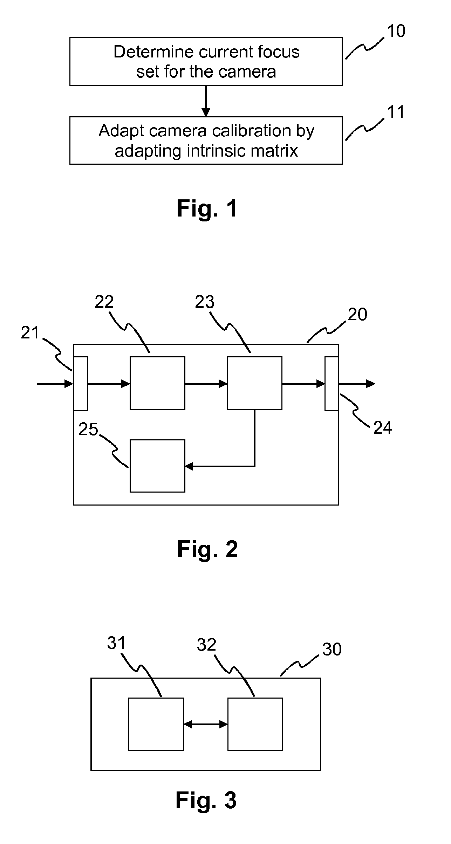

Fig. 1 schematically illustrates one embodiment of a method for camera calibration. In a first step a current focus set for the camera is determined during step 10. Then a camera calibration of the camera is adapted during step 11 based on the current focus by adapting an intrinsic matrix of a pinhole camera mapping function. To this end an adaptation term for the intrinsic matrix of the pinhole camera mapping function is determined based on a focus stroke resulting from the current focus, the focus stroke being the lens shift in relation to the image plane. For example, the adaptation term is a correction matrix that is added to the intrinsic matrix.

One embodiment of an apparatus 20 for camera calibration according to the present principles is schematically depicted in Fig. 2. The apparatus 20 has a focus evaluation unit 22 for determining, in accordance with step 10, a current focus set for a camera to be calibrated. This information is obtained, for example, via an input 21. In case the apparatus 30 is included in the camera to be calibrated, the information about the current focus set for the camera is readily available to the focus evaluation unit 22. A calibration unit 23 then adapts, in accordance with step 11 a camera calibration of the camera based on the current focus by adapting an intrinsic matrix of a pinhole camera mapping function, e.g. by determining an adaptation term for the intrinsic matrix of the pinhole camera mapping function based on a focus stroke resulting from the current focus. For example, the adaptation term is a correction matrix that is added to the intrinsic matrix. The adapted camera calibration is preferably made available via an output 24. It may also be stored for later use on a local storage unit 25. The output 24 may also be combined with the input 21 into a single bidirectional interface. Each of the different units 22, 23 can be embodied as a different hardware unit. Of course, the different units 22, 23 may likewise be fully or partially combined into a single unit or implemented as software running on a processor.

Another embodiment of an apparatus 30 for camera calibration according to the present principles is schematically illustrated in Fig. 3. The apparatus 30 comprises a processing device 31 and a memory device 32 storing instructions that, when executed, cause the apparatus to perform steps according to one of the described methods.

For example, the processing device 31 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or a combination thereof.

The local storage unit 25 and the memory device 32 may include volatile and/or non-volatile memory regions and storage devices such as hard disk drives and DVD drives as well as optical or magneto-optical drives as an example. A part of the memory is a non-transitory program storage device readable by the processing device 31, tangibly embodying a program of instructions executable by the processing device 31 to perform program steps as described herein according to the present principles.

In the following the present principles shall be explained in greater detail.

The use of an appropriate and calibrated pinhole camera model is essential for professional 3D modelling calculations. Therefore, practice requires accurate calibration measures to generate parameter sets describing the physical deviations from the ideal mathematical pinhole model in relation to the camera in operation. In fact, the calibration is very sensitive and is typically done for every pairing of sensor housing and camera lens, where each combination leads to an individual and distinct parameter set. Furthermore, the setting of the focal length in the camera system is decisive and any change usually requires new calibration parameters.

For camera resectioning a further problem arises when modern video cameras using an auto focus system are operated. The automatic adaptation of the focus is necessary for handling varying conditions given by camera motion or moving objects in a scene. Any change in focus, however, will simultaneously influence the calibration parameters gained during camera resectioning and thus cause distortions for the underlying pinhole camera model mapping.

In the following the terms "focal length" and "focus" and their relation to the pinhole camera mapping function will be described. Thereafter follows an assessment of the camera calibration error based on the available physical parameter of the camera optics. Finally, the present solution is explained for correcting the camera calibration based on the occurring focus modifications.

The focal length and the focus must be strictly distinguished, as the focal length describes a characteristic of the optical lens used in the camera system, whereas the focus describes the location of an optical lens in relation to a camera sensor. While the change of the focal length will cause a change of the depicted image section -the viewing angle- projected onto the camera image sensor, the change of the focus will determine which depth range of the depicted space is sharp, i.e. in focus. From the interrelationship between these two different quantities follows the so called "effective focal length", which is part of the pinhole camera mapping function.

The optical focal length is closely linked to the lens construction. For a start very simple lens systems and the impact of the focal length on the camera image projection shall be analyzed. The relation can easily be demonstrated with the example of two lenses: a fish-eye and a zoom lens. While an 8mm fish-eye lens projects a wide view with an angle of 140° to the camera sensor, a tele-lens with a focal length of 100mm will only show a restricted, but enlarged area of the scene to the camera sensor, covering an angle of 24°.

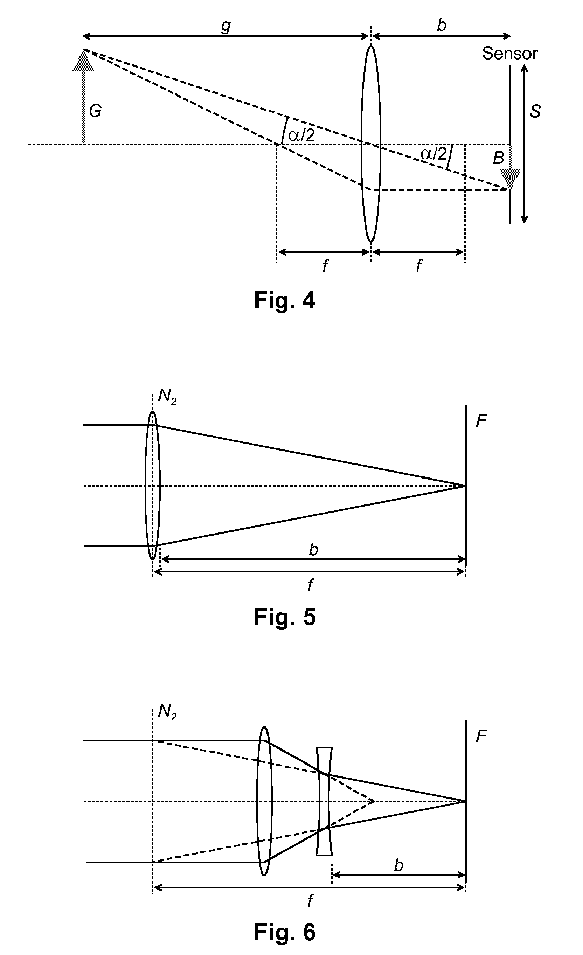

Fig. 4 explains the relation between the sensor size $S$, the focal length $f$, and viewing angle $\alpha$. Starting with the thin lens formula

$$\frac{1}{f} = \frac{1}{b} + \frac{1}{g}, \qquad\qquad (1)$$

where $b$ is the image distance and $g$ is the object distance, and considering that

$$\tan\frac{\alpha}{2} = \frac{B}{b}, \qquad (2)$$

where $B$ is the image height, it follows that

$$\alpha = 2 \cdot \arctan\frac{B \cdot (g - f)}{f \cdot g} \qquad (3)$$

and

$$\frac{1}{f} = \frac{1}{B} \cdot \tan\frac{\alpha}{2} + \frac{1}{g}. \qquad (4)$$

When the object distance $g$ is set to infinity ($g \to \infty$), the relation between the image size and the sensor size becomes $S = 2 \cdot B$, where the sensor size $S$ is determined by the diagonal of the sensor, i.e. $S = \sqrt{h^2 + w^2}$, where $h$ and $w$ are the height and the width of the sensor, respectively. The relation between the focal length $f$ and the viewing angle $\alpha$ can thus be expressed by means of the sensor dimensions:

$$\alpha = 2 \cdot \arctan\frac{S}{2f} \qquad (5)$$

and

$$f = \frac{2}{S} \cdot \cot\frac{\alpha}{2}. \qquad (6)$$

So far the analysis has only considered very simple lens systems. Typical camera optics, however, use much more complex lens systems. Therefore, the considerations need to include asymmetric lens constructions, the ubiquitous solution to build compact camera optics. The functionality of a lens system with asymmetric focal length is depicted in Fig. 5 and Fig. 6 [1]. Fig. 5 shows a long-focus lens, where the back focal distance or image distance $b$ is similar to the focal length $f$ as measured from the rear nodal point $N_2$ to the sensor plane $F$. A more compact camera optic is reached by shortening the back focal distance. This is possible by shifting the nodal plane, as shown by the equivalent design in Fig. 6, which uses a front positive lens and a rear negative lens in a telephoto combination. As a result $b$ is much less than $f$.

The term focus has to be strictly distinguished from the property of the optical focal length. The latter is closely linked with a lens or lens system while the former only describes where in front of the camera sensor the optics is located. The independency of focus and optical focal length is valid in general and encompass symmetric and asymmetric lens constructions alike.

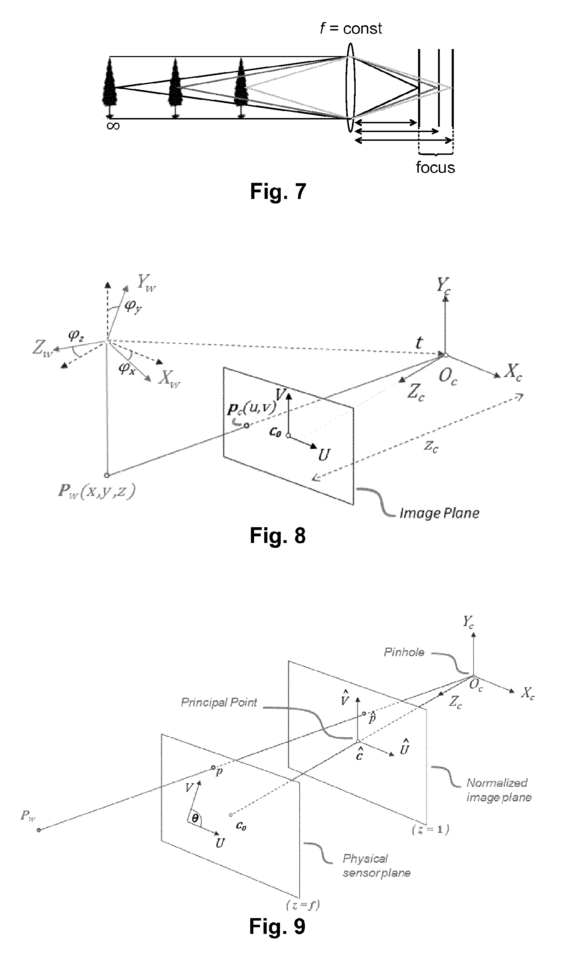

The principle of a focus manipulation is schematically depicted in Fig. 7, which compares different focus locations when the lens is moved perpendicularly to the camera sensor. The figure actually depicts a moving sensor. The lens is maintained in place to simplify a comparison of the different optical paths. The three double arrows in the figure explain how changes of the sensor locations are related to a focus change. This also demonstrates the direct influence of the focus on the effective focus defined for the later discussed pinhole camera mapping model. The pinhole camera model defines the effective focus by the distance between the pinhole and the sensor plane. The term focus describes the adaptation executed on a camera system to generate sharp images on the sensor. However, it needs to be kept in mind that from the perspective of the mathematical camera model a focus change affects the effective focus. In other words, the focus does not influence the focal length of the optics, but it does influence the effective focus, which is a substitute of the focal length within the mathematical pinhole model generated from camera resectioning.

When describing the conventional term focus it can be stated that the sharpness within an image does not have an abrupt transition from focus to defocus. Actually this transition is smooth and the focus has a range where focus degradation is not noticeable. The depth of focus or the range where objects in the scene become depicted in focus depends on the circle-of-confusion and is related to the aperture and the effective sensor pixel size [2].

The pinhole camera mapping function is based on the idea that a physical camera can be approximated by the linear model of a pinhole camera. The pinhole camera mapping function provides a rule to project 3D world points $P_w$ into the 2D image plane points $p_c$. Such a projection is depicted in Fig. 8. For the convenience in cascading three dimensional motions in space the 3D and 2D points are defined in homogenous coordinates, which results in an additional dimension for each, given by the world point $P_w = (x,y,z,1)^T$ and the image plane point $p_c = (u,v,1)^T$.

The mathematical mapping relation consists of a linear matrix multiplication, which can be split into a first intrinsic matrix $K$ describing the camera internal distortions and a second extrinsic matrix $(R|t)$ describing the rotational and translational relation between camera coordinates and world coordinates. This usually is written by the relation

$$z_c \begin{pmatrix} u \\ v \\ 1 \end{pmatrix} = K \cdot (R|t) \cdot \begin{pmatrix} x_w \\ y_w \\ z_w \\ 1 \end{pmatrix}. \qquad (7)$$

The second so called extrinsic matrix $(R|t)$ can again be separated into a rotational and a translational component as indicated by the letters $R$ and $t$. The extrinsic camera rotation $R$ is described by three axial angles $\varphi_x$, $\varphi_y$, and $\varphi_z$, which is combined with the extrinsic camera translation $t$ given by the vector $(t_x,t_y,t_z)^T$ according to

$$(R|t) = \begin{pmatrix} r_{11} & r_{12} & r_{13} & t_x \\ r_{21} & r_{22} & r_{23} & t_y \\ r_{31} & r_{32} & r_{33} & t_z \end{pmatrix}. \qquad (8)$$

The ideal intrinsic matrix $K$ is built by means of the effective focal length $f$ according to

$$K_{\text{pinhole}} = \begin{pmatrix} f & 0 & 0 \\ 0 & f & 0 \\ 0 & 0 & 1 \end{pmatrix}. \qquad (9)$$

However, this ideal intrinsic relation does not hold for real cameras and requires further adaptation to come closer to the physical realities.

The last two equations make it reasonable to regard the extrinsic matrix $(R|t)$ as completely independent from any changes taken for the focal length or the focus. Thus the extrinsic matrix can be excluded from further analysis. This, however, is not true for the intrinsic matrix $K$ defined by the effective focus. Here the analysis must incorporate further adaptations to improve the approximation of a physical camera system to the mathematical pinhole model.

Considering physical sensors requires further adaptations for the intrinsic camera matrix, which extend the ideal pinhole model representation $K_{\text{pinhole}}$. These extensions describe models approximating the physical reality.

The physical behavior is more closely approximated by linear modifications of the intrinsic matrix. Typical deviations of the image sensor from the ideal pinhole model are caused by a shift of the image sensor center away from the optical axis, not rectangular pixel shape, and possibly a skew between the sensor axes, i.e. the sensor axes might not be perpendicular.

The shift can be compensated by determining and adding the principle point $c_0 = (u_0,v_0)$ to the coordinates. The deviations between horizontal and vertical pixel dimensions (also called aspect ratio) are corrected by two multiplication factors $(k_u,k_v)$, which include the required dimension conversion from [mm] to [pixel]. The skew between the sensor axes is determined by an angle $\theta$. The skew vanishes if $\theta$ is set to 90°.

When all these parts are combined the intrinsic matrix becomes

$$\widehat{K} = \begin{pmatrix} fk_u & -fk_u \cot\theta & u_0 \\ 0 & fk_v \sin^{-1}\theta & v_0 \\ 0 & 0 & 1 \end{pmatrix}. \qquad (10)$$

The new pinhole camera model mapping function describes the relations for the normalized image plane as depicted in Fig. 9. The parameters in Equation 10 are composed of the multiplication factors and the principle point according to

$$\hat{u} = k_u \cdot u + u_0$$
$$\hat{v} = k_v \cdot v + v_0 \qquad\qquad (11)$$

and the skew angle θ

$$k_v \cdot v = \hat{u} \cdot cos\,\theta + \hat{v} \cdot sin\,\theta. \qquad\qquad (12)$$

This can be solved for $\hat{v}$

$$\hat{v} = v \cdot k_v \cdot \sin^{-1}\theta - \hat{u} \cdot \cos\theta \cdot \sin^{-1}\theta$$
$$= -k_u \cdot cot\,\theta \cdot u + k_v \cdot \sin^{-1}\theta \cdot v \qquad\qquad (13)$$

and determines the second column of $\hat{K}$. Normalization of the plane to $z = 1$ is reached by scaling the multiplication coefficients with $f$.

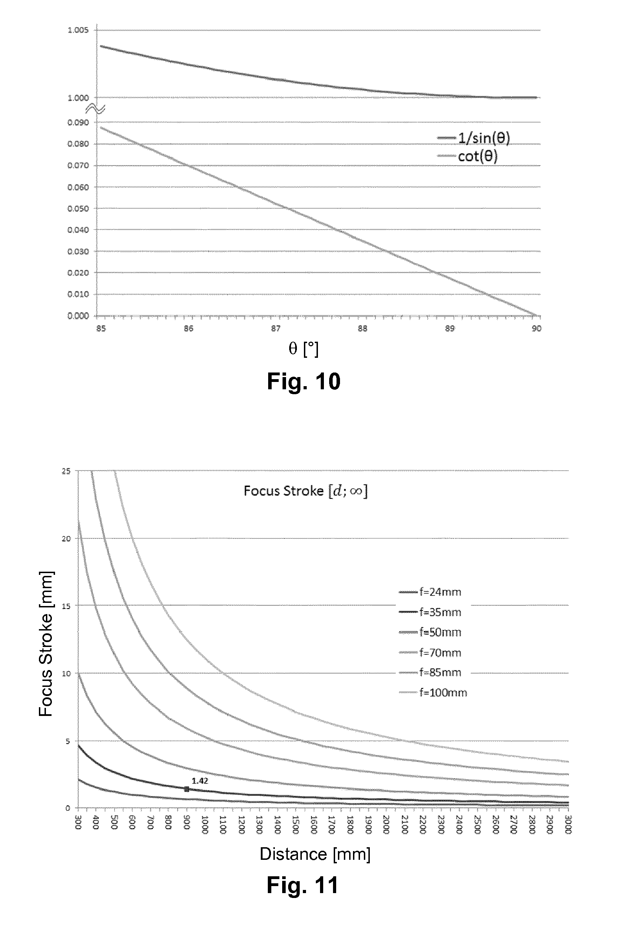

The influence of the skew angle θ on $\hat{K}$ is quite small. This becomes clear by analyzing the functions depicted in Fig. 10. For example, even for an unrealistically large value of the skew large angle θ = 85°, the values of $sin^{-1}\theta$ and $cot\,\theta$ would only cause marginal changes in $\hat{v}$:

$$\theta = 85.0°: \quad \hat{v} = f \cdot (-k_u \cdot 0.087489 \cdot u + k_v \cdot 1.003820 \cdot v)$$

$$\theta = 89.7°: \quad \hat{v} = f \cdot (-k_u \cdot 0.005236 \cdot u + k_v \cdot 1.000014 \cdot v)\,.$$

Therefore, in practice the influence of the skew angle can be neglected:

$$\hat{v} = f \cdot (-k_u \cdot cot\,\theta \cdot u + k_v \cdot sin^{-1}\theta \cdot v) \approx fk_v \cdot v\,. \qquad\qquad (14)$$

The intrinsic matrix can thus be simplified to

$$\widehat{K}' = \begin{pmatrix} fk_u & 0 & u_0 \\ 0 & fk_v & v_0 \\ 0 & 0 & 1 \end{pmatrix}. \qquad\qquad (15)$$

Further models describe non-linear distortions, which are superimposed by the camera lens system. A correction for non-linear lens distortions is, however, omitted, as these are too complex and also coupled with the intrinsic matrix [3].

The camera calibration is carried out by means of calibration software, which generates calibration parameters defining the intrinsic pinhole camera matrix (Equation 15) for the camera lens system. Input for the calibration tool are single images taken from a planar checkerboard pattern posed in different angles to the camera and thereby covering the complete image area. The calibration software is known in the art and, therefore, not further discussed.

The focus stroke, i.e. the lens shift in relation to the image plane, has a direct impact on the efficient focal length of the pinhole camera mapping model and thus determines the introduced camera calibration error. In order to formulate a generally applicable error estimate describing the focus influence exercised on the calibration data, based on the rules of thin lens optics the focus stroke for a camera lens is determined. This is particularly beneficial for cases where the camera lens constructions apply technically sophisticated internal focusing and thus prohibit a direct determination of any focus stroke measurement.

By means of the optics formula for thin-lenses the focus stroke in relation to the infinity position of the lens can be developed as

$$\frac{1}{b} + \frac{1}{g} = \frac{1}{f} \quad \Leftrightarrow \quad b = \frac{gf}{g-f}. \tag{16}$$

Setting the object distance to infinity for the camera lens, i.e. $g = \infty \Rightarrow b = f$, it can be concluded that

$$\sigma_\infty = b - f = \frac{gf}{g-f} - f = \frac{f^2}{g-f}, \tag{17}$$

where $\sigma_\infty$ describes the total stroke between the focus distance settings $g$ and $\infty$, i.e. in the interval $[g;\infty]$. The relation in Equation 17 describes a family of curves depicted in Fig. 11, where the distance measure is denoted by $d$.

Today's camera systems are typically capable of recording the camera focus as metadata besides the video footage. This not only allows tracking the calibration infringement, but also facilitates manipulation of the camera calibration data for error reduction.

Basis for the error correction is the intrinsic camera calibration matrix, which is modified in accordance with the focus stroke. The determined focus stroke is used to calculate the focus-corrected calibration matrix as

$$\widetilde{\boldsymbol{K}}'(d_f) = \widehat{\boldsymbol{K}}' + \psi_{OP}(d_f) \cdot \begin{pmatrix} 1 & 0 & 0 \\ 0 & 1 & 0 \\ 0 & 0 & 0 \end{pmatrix}$$
$$= \begin{pmatrix} fk_u + \psi_{OP}(d_f) & 0 & u_0 \\ 0 & fk_v + \psi_{OP}(d_f) & v_0 \\ 0 & 0 & 1 \end{pmatrix}, \tag{18}$$

where the correction additive $\psi_{OP}$ is regulated by the direct difference between the varying sensor distances set by the focus. $\psi_{OP}$ is expressed by means of the focus set during camera calibration, i.e. the operating point OP $f_{OP}$, and the varying focus $d_f$ set while shooting the footage:

$$\psi_{OP}(d_f) = b_d - b_{OP} = \frac{(f_{OP} - d_f) \cdot f^2}{(f_{OP} - f) \cdot (d_f - f)}. \tag{19}$$

Two additional versions of Equation 19 are given below in Equations 20 and 21. They are intended to cope with situations where either the operating point $f_{OP}$ or the farer away focus limit $d_f$ is set to infinity. They are generated from Equation 19 by setting either $b_{OP} = \infty$ or $b_d = \infty$:

$$\psi_{OP=\infty}(d_f) = \frac{f^2}{(d_f - f)} \tag{20}$$

$$\psi_{OP}(d_f = \infty) = \frac{-f^2}{(f_{OP} - f)}. \tag{21}$$

As an example the positive effect of the correction shall be shown by means of the exemplary calibration data

$$K_\infty = \begin{pmatrix} 4235.15 & 0 & 2069.67 \\ 0 & 4235.45 & 1434.59 \\ 0 & 0 & 1 \end{pmatrix}$$

and

$$K_{0.9} = \begin{pmatrix} 4428.86 & 0 & 2068.13 \\ 0 & 4429.14 & 1435.04 \\ 0 & 0 & 1 \end{pmatrix}.$$

The two intrinsic matrices have been generated in two separate camera calibrations executed on pictures taken with a 35mm lens with two different focus settings, namely 0.9m and $\infty$. Taking these values the following correction additives $\psi_{OP}(d_f)$ can be determined:

$$\psi_\infty(0.9) = \frac{35^2}{(900 - 35)}\,\text{mm} = 1.4167\,\text{mm}$$

and

$$\psi_{0.9}(\infty) = \frac{-35^2}{(900 - 35)}\,\text{mm} = -1.4167\ \text{mm}\,.$$

Both values are given in mm and are converted to pixel measure before they can be added to the intrinsic matrices $K_\infty$ and $K_{0.9}$. The transformation factor is:

$$\frac{\text{sensor width}}{\text{image width}} = \frac{35\ [\text{mm}]}{4240\ [\text{pixel}]} = 8.2547 \cdot 10^{-3}\,\frac{[\text{mm}]}{[\text{pixel}]}\ .$$

After converting $\psi_\infty(0.9)$ and $\psi_{0.9}(\infty)$ in [pixel] measure and applying Equation 18 the corrected matrices become

$$\widetilde{\widetilde{K}}_{\infty \to 0.9} = \begin{pmatrix} 4406.77 & 0 & 2069.67 \\ 0 & 4407.07 & 1434.59 \\ 0 & 0 & 1 \end{pmatrix}$$

and

$$\widetilde{\widetilde{K}}_{0.9 \to \infty} = \begin{pmatrix} 4257.24 & 0 & 2068.13 \\ 0 & 4257.52 & 1435.04 \\ 0 & 0 & 1 \end{pmatrix},$$

which demonstrates the performance of the correction.

## REFERENCES

[1] Jacobson et al.: "The Manual of Photography", Focal Press Ninth edition, 2000, page 93, Figure 7.9.

[2] http://en.wikipedia.org/wiki/Depth_of_field

[3] Heikkilä et al.: "A Four-step Camera Calibration Procedure with Implicit Image Correction", Proceedings of the 1997 Conference on Computer Vision and Pattern Recognition (CVPR '97), pp. 1106-1112.

**Claims**

1. A method for camera calibration, the method **comprising:**

   - determining (10) a current focus set for the camera; and
   - adapting (11) calibration of the camera based on the current focus by adapting an intrinsic matrix of a pinhole camera mapping function.

2. The method according to claim 1, **wherein** an adaptation term for the intrinsic matrix of the pinhole camera mapping function is determined based on a focus stroke resulting from the current focus.

3. The method according to claim 2, **wherein** the adaptation term is a correction matrix that is added to the intrinsic matrix.

4. The method according to claim 3, **wherein** the correction matrix is a 3×3 matrix whose matrix elements are zero except for the first two matrix elements on the main diagonal.

5. The method according to claim 4, **wherein** the first two matrix elements on the main diagonal are determined by a difference between a current effective image sensor distance and an effective image sensor distance set for calibration.

6. A computer readable storage medium having stored therein instructions enabling camera calibration, which, when executed by a computer, cause the computer to:

   - determine (10) a current focus set for a camera to be calibrated; and
   - adapt (11) calibration of the camera based on the current focus by adapting an intrinsic matrix of a pinhole camera mapping function.

7. An apparatus (20) for camera calibration, the apparatus (20) **comprising:**

   - a focus evaluation unit (22) configured to determine (10) a current focus set for a camera to be calibrated; and
   - a calibration unit (23) configured to adapt (11) calibration of the camera based on the current focus by adapting an intrinsic matrix of a pinhole camera mapping function.

8. An apparatus (30) for camera calibration, the apparatus (30) comprising a processing device (31) and a memory device (32) having stored therein instructions, which, when executed by the processing device (31), cause the apparatus (30) to:

   - determine (10) a current focus set for a camera to be calibrated; and
   - adapt (11) calibration of the camera based on the current focus by adapting an intrinsic matrix of a pinhole camera mapping function.

Determine current focus
set for the camera

10

↓

Adapt camera calibration by
adapting intrinsic matrix

11

**Fig. 1**

22    23    20

21

25

24

**Fig. 2**

31    32    30

**Fig. 3**

**Fig. 4**

**Fig. 5**

**Fig. 6**

**Fig. 7**

**Fig. 8**

**Fig. 9**

Fig. 10

Fig. 11

Europäisches
Patentamt

European
Patent Office

Office européen
des brevets

**EUROPEAN SEARCH REPORT**

Application Number

EP 15 30 5893

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | C.S. FRASER ET AL: "Zoom-Dependent Camera Calibration in Digital Close-Range Photogrammetry", PHOTOGRAMMETRIC ENGINEERING & REMOTE SENSING, vol. 72, no. 9, 1 September 2006 (2006-09-01), pages 1017-1026, XP055232181, * page 1018, column 2, section "Principial Distance"; table 1 * * page 1020, column 2, section "Z-D Calibration Process", paragprahs 1-3 and equations 3-5 * | 1-8 | INV. G06T7/00 |

-----

TECHNICAL FIELDS
SEARCHED (IPC)

G06T
H04N

The present search report has been drawn up for all claims

| Place of search | Date of completion of the search | Examiner |
|---|---|---|
| Munich | 30 November 2015 | Kollreider, Klaus |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JACOBSON et al.** The Manual of Photography. Focal Press, 2000, 93

- **HEIKKILÄ et al.** A Four-step Camera Calibration Procedure with Implicit Image Correction. *Proceedings of the 1997 Conference on Computer Vision and Pattern Recognition (CVPR '97),* 1997, 1106-1112